# EUROPEAN PATENT SPECIFICATION

(11) **EP 1 325 373 B1**
(45) Date of publication and mention of the grant of the patent: **24.11.2010**
(21) Application number: 01967867.1
(22) Date of filing: 10.09.2001
(51) Int. Cl.: G02B 6/44, H02G 15/14, H01R 13/523

(54) **A METHOD AND A DEVICE FOR ENSURING A SATISFACTORY TENSILE STRENGTH WHEN JOINTING A SUBMARINE CABLE**
VERFAHREN UND EINRICHTUNG ZUR SICHERSTELLUNG EINER ZUFRIEDENSTELLENDEN ZUGSTÄRKE BEIM SPLEISSEN EINES UNTERWASSERKABELS
PROCEDE ET DISPOSITIF DESTINES A ASSURER UNE RESISTANCE A LA TRACTION SATISFAISANTE LORS D'UNE JONCTION DE CABLE SOUS-MARIN

(30) Priority: 13.09.2000 SE 0003234
(43) Date of publication of application: 09.07.2003
(73) Proprietor: ABB AB, 721 83 Västerås (SE)
(72) Inventor: WORZYK, Thomas, S-370 30 Rödeby (SE); NYBERG, Sverker, S-371 46 Karlskrona (SE); HANSSON, Ola, S-371 32 Karlskrona (SE)
(74) Representative: Dahlstrand, Björn
(86) International application number: PCT/SE2001/001933
(87) International publication number: WO 2002/023246

(56) References cited:
- US-A- 4 416 061
- US-A- 4 722 590
- US-A- 4 965 411

## Description

### TECHNICAL FIELD

The present invention relates to a method for ensuring a satisfactory tensile strength across a joint when jointing a submarine cable. The submarine cable comprises two or more cable cores, and, for mechanical protection and the required tensile strength, a plurality of armour wires.

The present invention also relates to a device for carrying out the method.

By cable is meant a means of transmitting electric current designed with one or more conductors, each conductor surrounded by insulating material, which combination of conductor and insulating material in this application is called a cable core. The word cable is used in the following also as a general expression for the two parts which are being joined together as well as for designating the joined-together result including the joint. The invention is primarily intended to be applied when working with high-voltage cables for underwater use, for example on the sea bed.

### BACKGROUND ART

In addition to a satisfactory electrical insulation, electric submarine cables must usually also possess a mechanical strength for relatively great tensile stresses. Also in those cases where the cable during operation remains unloaded in the ground or on a sea bed, the stresses may become very great when laying the cable. When manufacturing a cable, the cable is therefore provided with one or more layers of armouring which, besides protecting against mechanical damage, shall be able to withstand the expected load when laying the cable. When jointing during cable-laying, or during repairs which necessitate removal of the armouring, either new armouring must be supplied over the joint or the repair, and be connected to the armouring on both sides of the joint by means of, for example, weld joints, or other means must be arranged which are able to transmit the tensile force from the armouring on one side of the joint to the armouring on the other side thereof.

One known method for carrying out this, by restoring armouring, comprises laying pre-profiled wires manually around the cable. This is a time-consuming operation which, in addition, requires both strength and experience for the result to become satisfactory. Since the cross-section area of the cable usually becomes larger at, for example, a joint and deviations from a circular shape may occur, the work often becomes problematic. During transport of pre-profiled wires to a place of work, there is also the risk of the wires being deformed and that they either have to be adjusted or rejected.

One method for replacing the armour over a cable joint, including the steps of making a number of pretwisted armour elements is revealed in EP 0 450 271 A2. The elements are premade by stranding a number of armour elements over a length of pipe or tube having a diameter smaller than the cable core and cable core joint. The stranded or spiralled wire elements are transferred from the tube(s) to an intermediate tube having a diameter larger than the cable core and cable armour. The armour is replaced by inserting the tube over one of the cable ends before making the cable joint, and sliding the tube over the cable joint when it is finished, withdrawing the tube from underneath the armour elements, and clamping, welding or soldering the ends of the elements to the cable armour.

A similar method for jointing the armouring wires of electrical cables, in particular power cables, in order to ensure that the stress or tension in the cable during handling and installation is equally distributed among the individual armouring wires is revealed in US-PS 4,416,061. The armouring wires are preliminary locked in fixed positions along a cable circumference and tensioned towards each other before jointing, the individual wire joints being performed along a circumference or in a row along a generatrix of the cable.

When the cable joint has an essentially circular cross section, these known methods may usually be used with a satisfactory result. The joint will withstand, to a sufficient extent, the tensile stress to which the cables are subjected on both sides of the joint. When the cross section of the joint is not round, or is even irregular, there is a considerable risk that the armour wires placed there cannot be stretched completely uniformly. If this cannot be done, certain wires will remain unloaded and the others, in a reduced number, will have to carry the whole load. The tensile strength may be considerably reduced. In the worst case, the load will instead be taken up by the conductor or the conductors.

US-PS 4,722,590 reveals a termination for the armour of an armoured submarine cable at a repeater housing, which comprises concentric sleeves which are swaged together to grip the armour there between. The termination can be mounted in an adjustable position relative to a connector tube which forms part of the repeater housing. The sleeves are held in the (rigid) tube by stop members which screw into the ends of the rigid connector tube. The method has particular application in jointing armoured optical fibre submarine cables.

The method will make it possible to avoid deleterious effects of tensile loads in the optical fibres, by supplying a strong and stiff connection between the the armour on the respective sides of the joint while avoiding the earlier common weakening of the armour wires in the conventional methods which require that these wires are bent back over the surface of the respective cable. The core of the invention is the concentric sleeves and the way in which they are connected to the armour. The method has as a prerequisite a circular symmetry, or at least a nearly circular symmetry, and will be difficult to apply for a general cable cross section like a two-core high voltage cable.

US-PS 4,965,411 reveals a splice for joining the armouring of two wire-armoured cables. The armouring is clamped between conical parts at each cable end. Each inner conical part is integral with a flange bolted to one of two similar flanges fixed to opposite ends of a generally tubular flexible assembly itself constituted by three layers of metal wires. The innermost first layer is wound helically, indicated as a tight winding with a very low pitch to withstand torsional forces. The other two layers are wound with substantially equal and opposite pitches, indicated with a very high pitch to withstand tensional forces. The inside diameters of the first layer and of the circular openings in each of the two flanges fixed thereto are such that the flexible assembly is capable of sliding at one of its ends over at least one of the cables to be connected after its armouring layers have been removed, and at its other end over the splice between the cables themselves. The purpose is to obtain a flexible joint with mechanical performance in the spliced zone which is no worse than the mechanical performance away from the splice, especially having a bending strength equal to or greater than the bending strength of the cables themselves. The core of the invention is the conical parts at each cable end, the way in which they are connected to the armour and the use of a prefabricated tubular flexible assembly for the connection between the two conical parts by the use of threaded rods.

One common main disadvantage with the last two jointing methods is that the cable joint will have a considerably larger diameter than the cable itself. This increased diameter will lead to difficulties when handling the cable in the laying operation when it has to pass over pulleys and through feeding systems.

Depending on the method of jointing, the joint in the cable conductor may have a reduced tensile strength compared with the conductor in the cable. For this reason, it is extremely important for the conductor joint not to be subjected to too high tensile stresses at the region of the joint and a satisfactory tensile-stress relief is of vital importance. In those cases where part of the load is taken up by the conductors, there is a risk of cable breakdown near the joint.

### OBJECTS OF THE INVENTION

The main object of the present invention is to suggest a simple, safe and flexible method of providing a satisfactory tensile strength when jointing cables.

A second object is to suggest a method of achieving satisfactory tensile strength when jointing cables without the use of pre-profiled armour wires.

A third object is to suggest a method of achieving satisfactory tensile strength when jointing cables of a non-circular cross section.

A fourth object is to suggest a method to produce a cable joint which is possible to handle in ordinary laying systems with increased operational security.

A fifth object is to suggest a method to produce a cable joint without considerable increase of diameter or cross section compared with the diameter or cross section of the cable itself.

A sixth object is to suggest a method of compensating for a reduced tensile strength for, for example, copper conductors near a joint.

### SUMMARY OF THE INVENTION

The present invention relates to a method for ensuring the required tensile strength across a joint when jointing a submarine cable. The submarine cable comprises two or more cable cores, and, for mechanical protection and the required tensile strength, a plurality of armour wires. The armour wires, placed in the form of helical lines or the like, are distributed essentially uniformly around the circumference of the cable. A first means is connected to the armouring of the cable on a first side of the joint or the repair, and a second means is connected to the armouring of the cable on a second side of the joint or the repair. The first means and the second means are interconnected by an elongated flexible member.

In the method according to the invention the first and second means are fully, or essentially fully, placed within a space having a radial cross section at the joint or repair equal to the radial cross section of the cable itself, the elongated flexible member is fully, or essentially fully, placed within a space having a radial cross section at the joint or repair equal to the radial cross section of the cable itself, and the first and second means are provided with holes or recesses for the elongated flexible member.

The present invention also relates to a device for carrying out the method. The device comprises a first means co-operating with the armouring of the cable on a first side of the joint or the repair, and a second means co-operating with the armouring of the cable on a second side of the joint or the repair, as well as an elongated flexible member co-operating with the first means and the second means.

The first means, the second means and the elongated flexible member being placed, fully or essentially fully, within a space having a radial cross section at the joint equal to the radial cross section of the cable itself. The first and second means being provided with holes or recesses for the elongated flexible member.

### GENERAL DESCRIPTION OF THE INVENTION

When laying high-voltage cables, above all on or under the sea bed, the mechanical stresses on the cable become very great. The cable must be designed and dimensioned to carry the length of cable which is not yet supported by the sea bed, which may be question of hundreds of metres. Tensile forces of up to 40 tons and more may occur.

High-voltage cables for use on the sea bed must therefore be provided with supporting elements, for example armour wires around the primary electrical insulation. In connection with jointing or repair, the armourings on both sides of the joint or the repair must be connected to each other to retain the tensile strength. This can be done by bringing a plurality of armour wires, distributed essentially uniformly around the circumference of the cable, to make contract with the cable, in the form of helical lines or the like, and be welded to the armouring of the cable. To obtain sufficiently high tensile strength, the wires should be pretensioned before being connected to the armouring of the cable.

Especially when jointing cables of non-circular cross sections, it has been found that this method does not always provide the required tensile strength, because the load will not become uniformly distributed between the armour wires which are arranged in the form of essentially helical lines, and because pretensioning of longer preformed armour wires on a non-circular cable cross section is almost impossible.

Other known methods to retain the tensile strength across a joint incorporates use of rigid or flexible tubes, or similar elements, which are placed around the cable cores at the joint. These known methods have two main disadvantages. They will give an increased diameter implying handling problems when laying the cable and they will unavoidably give a stiffer joint even if the connecting elements as such are fairly flexible.

According to the present invention, a method of jointing submarine cables is suggested, whereby the known disadvantages of the method of restoring the armouring, in the best way, are avoided and whereby a very low degree of handling problems are inferred.

This is achieved according to the proposed method by connecting a first means to the armouring of the cable on a first side of the joint or the repair and by connecting a second means to the armouring of the cable on a second side of the joint or the repair. The first means and the second means have, for example, the shape of a sleeve or a washer which surrounds the cable cores of the cable and is connected to the respective armouring, preferably by welding. The connection must be dimensioned and be carried out so as to be able to take up the load in question.

According to the proposed method, the first means and the second means are connected by an elongated flexible member, suitably by providing, in the first and second means, holes or recesses for the elongated flexible member. The elongated flexible member may consist of a steel cable or the like, which must be so strong that it is also capable of taking up the load in question. Suitable alternatives may be a chain or a rope of aramide fibre (KEVLAR) or a corresponding high-strength synthetic fibre, e.g. reinforced with carbon fibres. In a preferred embodiment, the elongated flexible member forms a closed loop, for example by the use of a wire lock or a corresponding device.

The first means and the second means are placed around the cable cores in such a way that they are fully, or essentially fully, placed within a space defined by a cross section at the joint or repair equal to the cross section of the cable itself. The elongated flexible member is also fully, or essentially fully, placed within a space defined by a cross section at the joint or repair equal to the cross section of the cable itself, preferably placed in the 'valleys' between the cable cores.

Before the loop is closed, or before the first means and the second means are connected to the armouring of the respective cable, the steel cable, i.e. the elongated flexible member, is pretensioned, such that the conductors of the cable are safely relieved. For the same reason, the elongated flexible member must be pretensioned also when other variants are used, which do not entail forming the elongated flexible member into a loop. This may then suitably take place by means of some form of screw device.

The elongated flexible member should be positioned in relation to the cable cores by means of one or more spacers.

### BRIEF DESCRIPTION OF THE DRAWINGS

The invention will now be explained in greater detail with reference to the accompanying drawings, wherein
Figure 1 shows a schematic overall view of a device suitable for carrying out the suggested method;
Figure 2 shows a schematic overall view of a device suitable for carrying out the suggested method, as viewed in a longitudinal section perpendicular to the projection of Figure 1;
Figure 3 schematically shows a cross section through the device according to Figures 1 and 2;
Figure 4 schematically shows an embodiment of a first means suitable to use in the device according to Figures 1 and 2;
Figure 5 schematically shows a spacer suitable to use in the device according to Figures 1 and 2.

### DESCRIPTION OF THE PREFERRED EMBODIMENTS

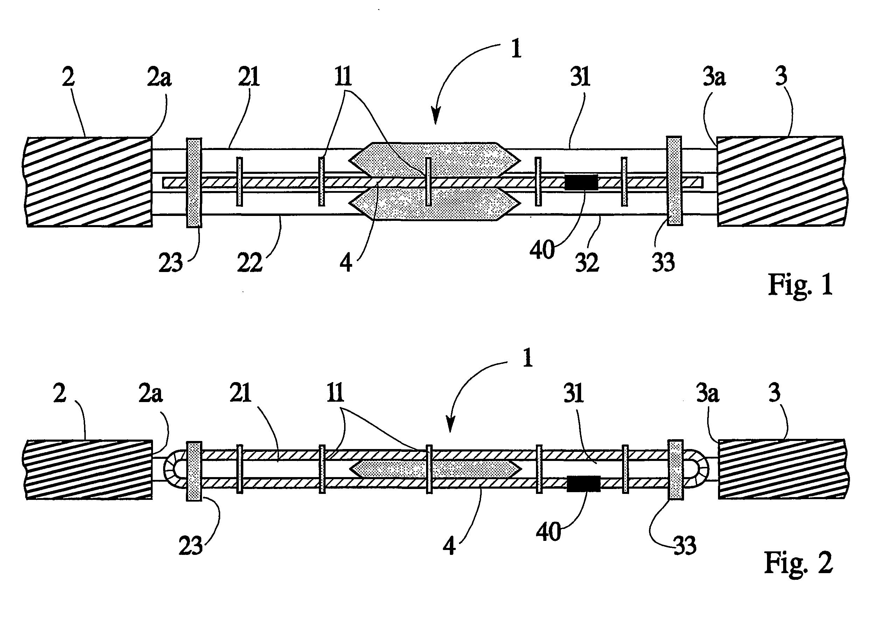

Figures 1 and 2 schematically show a device for jointing a submarine cable, wherein a first cable 2 comprising two cable cores 21 and 22 has been connected to a second cable 3, similarly comprising two cable cores 31 and 32. The armouring of the cables 2, 3 has been removed near the joint 1 and terminates at the positions 2a and 3a, respectively. The distance between these positions 2a and 3a, respectively, may be more than 10 m. For increased clarity, in Figure 2, one cable core, the front core, 22 and 32, respectively, has been removed.

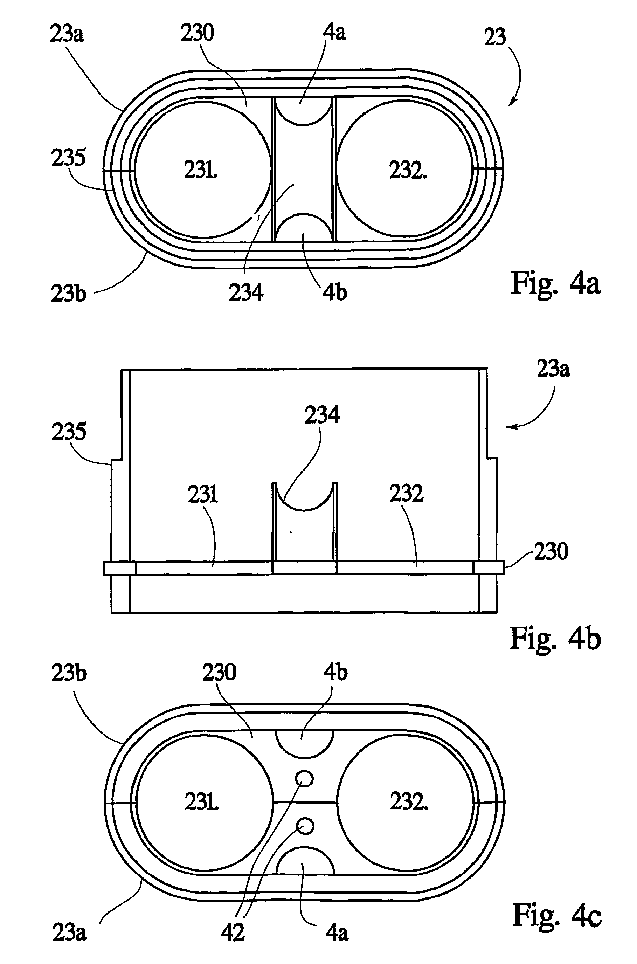

A first means 23 is arranged adjacent to the armouring of the first cable 2 at position 2a, and is connected to this armouring in a manner not shown. A second means 33 is arranged adjacent to the armouring of the second cable 3 at position 3a, and is connected to this armouring in a manner not shown. One suggested design of these first and second means 22, 23 is clear in detail from Figure 4.

A flexible elongated member 4, in the form of a steel cable, is passed in a loop through holes (not shown) in the first means 23 and the second means 33. The loop is closed by a wire lock 40.

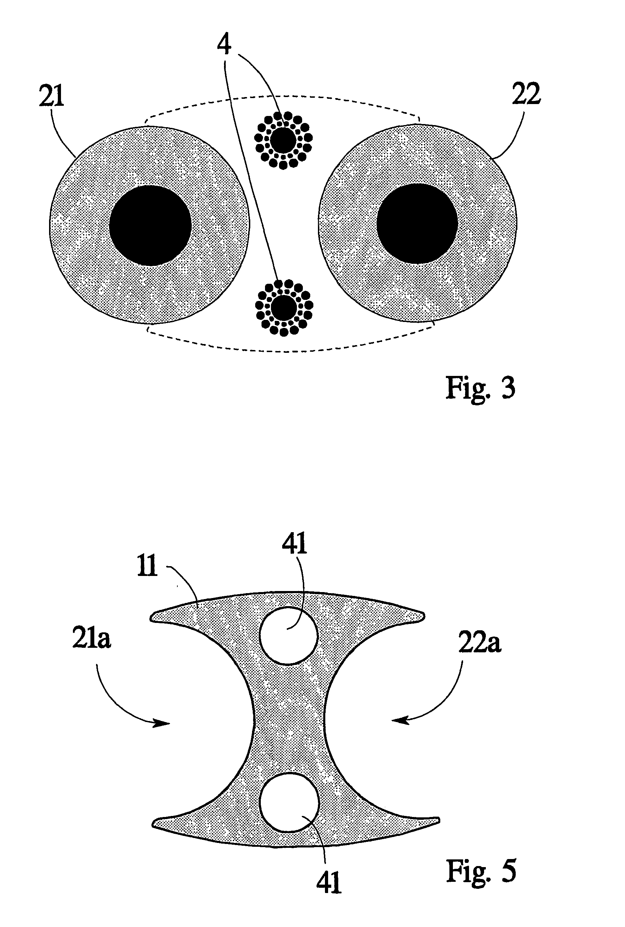

The position of the steel cable 4 relative to the cores 21, 22, 31, 32 of the cables 2, 3 is determined by spacers 11. The detailed embodiment of these spacers is clear from Figure 5.

Figure 3 shows a cross section through the device according to Figure 1 and Figure 2, with two cable cores 21 and 22 as well as the steel cable 4 passed in a loop.

Figure 4 shows a detailed embodiment of a first means 23 in the form of a metal sleeve composed of two symmetrical parts 23a and 23b such that the shape resembles an imaginary fence surrounding a running track. The sleeve has a bottom plate 230 with two large circular holes 231, 232 for the cores 21, 22 of the cable 2, two semicircular holes 4a, 4b for the steel cable 4a, and two smaller circular holes 42 intended for attachment, by means of screws, of an element in the form of a semicircular pulley 234 to the bottom plate 230 and hence also for joining together the two parts 23a and 23b. The task of the semicircular pulley 234 is to guide the steel cable 4 and to distribute the load taken up by the wire.

Figure 4a shows the metal sleeve 23 viewed from the position 2a along the cable 2. Figure 4c shows the metal sleeve 23 viewed in the opposite direction along the cable 2. Figure 4b shows one of the symmetrical parts, 23a, of the metal sleeve 23 viewed in the partition in the symmetry plane.

According to Figure 4b, the sleeve 23 is asymmetrical in relation to the bottom plate 230. The upwardly-directed wall 235 is intended to be welded to the armouring of the cable 2. It is suitably designed with a thickness decreasing stepwise from the bottom plate 230, each step being connected to one layer of armouring.

Figure 5 shows an embodiment of a suitable spacer 11 in the form of a plastic washer with two recesses 21a and 22a, respectively, for the two cores 21 and 22 of the cable 2 and two holes 41 for co-operation with the steel cable 4, for the purpose of achieving the relative positions, according to Figure 3, for the cores 21, 22 of the cable 2 and the steel cable 4.

The above description relating to the first means 23 and the co-operation with the first cable 2 applies similarly to the second means 33 and the co-operation with the second cable 3.

In the method according to the invention, the cores of the cable are suitably jointed in a conventional manner. Thereafter, the steel cable 4 is fitted through a suitable number of spacers 11 and the two halves 23a, 23b of the first means 23 and the corresponding two halves of the second means 33 are fitted into holes 41, 4a, 4b, etc., provided therefor. The steel cable 4 is closed in a loop by means of a wire lock 40. The steel cable 4 with the spacers 11 fitted thereon as well as the first and the second means 23, 33 are placed between the cores 21, 22 etc. of the cable according to Figure 1 and Figure 2.

The semicircular pulley 234 is mounted as a joint between the two parts 23a and 23b of the first means 23 and in a corresponding way the second means 33 is joined together. The joint between the parts 23a and 23b of the first means 23 and the corresponding joint between the parts of the second means 33 are welded.

The loop with the steel cable 4 is tensioned. The first means 23 is welded to the armouring on the first cable 2. The second means 33 is welded to the armouring on the second cable 3.

The joint region is completed by covering with, for example, bitumen in a conventional manner.

### ALTERNATIVE EMBODIMENTS

The method according to the invention is, of course, not limited to the embodiment described above but may be varied in a plurality of ways within the scope of the appended claims.

Thus, for example, the method according to the invention may be combined with restoration of armouring across a cable joint for the purpose of achieving additionally increased tensile strength and hence an increased safety margin with respect to rupture or for the purpose of providing the joint with protection against mechanical damage. In such a case, the first means 23 and the second means 33 are suitably made symmetrical in the longitudinal direction of the cable so as to provide possibilities for welding of armouring in both directions. Such reinforcement is, of course, of special importance when the submarine cable is to be laid at extreme depths.

Further, it is, within the invention, of course possible to have more than one elongated flexible member (4).

## Claims

1. A method to ensure the required tensile strength across a joint or a repair when jointing or repairing a submarine cable, the cable comprising
two or more parallel cable cores, and, for mechanical protection and the required tensile strength, a plurality of armour wires, arranged in the form of helical lines or the like, distributed essentially uniformly around the circumference of the cable,
wherein
a first means is connected to the armouring of the cable on a first side of the joint or the repair,
a second means is connected to the armouring of the cable on a second side of the joint or the repair, and
the first and second means are interconnected by an elongated flexible member,
**characterized in**
**that** the first and second means fully, or essentially fully, are placed within a space having a radial cross section at the joint or repair equal to the radial cross section of the cable itself,
**that** the elongated flexible member fully, or essentially fully, is placed within a space having a radial cross section at the joint or repair equal to the radial cross faction of the cable itself, and
**that** the first and second means are provided with holes or recesses for the elongated flexible member.

2. A method according to claim 1, **characterized in that** the elongated flexible member is passed through the holes or recesses such that the flexible member is forming a loop and that the loop is closed by a wire lock or the like.

3. A method according to claim 1, or 2, **characterized in that** the elongated flexible member is tensioned.

4. A method according to claim 1, 2, or 3, **characterized in that** the elongated flexible member is positioned in relation to the cores of the cable by means of one or more spacers.

5. A device
for carrying out the method according to any of the preceding claims when jointing a submarine cable (2,3) comprising two or more parallel cable cores (21,22,31,32), for the purpose of ensuring the required tensile strength across the joint (1), whereby the submarine cable (2,3), for mechanical projection and for the required tensile strength, comprises a plurality of armour wires, arranged in the form of helical lines or the like, distributed essentially uniformly around the circumference of the cable (2,3),
comprising
a first means (23) co-operating with the armouring of the cable (2) on a first side of the joint (1) or the repair,
a second means (33) co-operating with the armouring of the cable (3) on a second side of the joint (1) or the repair, and
an elongated flexible member (4) co-operating with the first means (23) and the second means (33),
**characterized by**
the first and second means (23,33) fully, or essentially fully, being placed within a space having a radial cross section at the joint or repair (1) equal to the radial cross section of the cable (2,3) itself,
the elongated flexible member (4) fully, or essentially fully, being placed within a space having a radial cross section at the joint or repair (1) equal to the radial cross section of the cable (2,3) itself, and
the first and second means (23,33) being provided with holes or recesses (4a,4b) for the elongated flexible member (4).

6. A device according to claim 5, **characterized in that** the elongated flexible member (4) consists of a steel cable or the like.

7. A device according to claim 5 or 6, **characterized in that** the elongated flexible member (4) forms a closed loop.

8. A device according to claim 5, 6 or 7, **characterized by** spacers (11) positioning the elongated flexible member (4) in relation to the cores (21, 22, 31, 32) of the cable (2,3).

## Patentansprüche

1. Ein Verfahren zur Sicherstellung der erforderlichen Zugfestigkeit über eine Verbindung oder eine Reparaturstelle beim Verbinden oder Reparieren eines Unterseekabels, wobei das Kabel umfasst:
zwei oder mehr parallele Kabelseelen und, für den mechanischen Schutz und die erforderliche Zugfestigkeit, eine Vielzahl von Armierungsdrähten, welche in der Form spiralförmiger Linien oder ähnlichem im Wesentlichen gleichmäßig um den Kabelumfang verteilt sind,
wobei
ein erstes Mittel mit der Kabelarmierung auf einer ersten Seite der Verbindung oder der Reparaturstelle verbunden wird,
ein zweites Mittel mit der Kabelarmierung auf einer zweiten Seite der Verbindung oder der Reparaturstelle verbunden wird, und
das erste und zweite Mittel miteinander durch ein längliches flexibles Element verbunden werden,
**dadurch gekennzeichnet,**
**dass** die ersten und zweiten Mittel komplett oder im Wesentlichen komplett innerhalb eines Raums positioniert sind, der einen radialen Querschnitt an der Verbindung oder der Reparaturstelle gleich dem Querschnitt des Kabels selbst aufweist,
**dass** das längliche flexible Element komplett oder im Wesentlichen komplett innerhalb eines Raums positioniert ist, der einen radialen Querschnitt an der Verbindung oder der Reparaturstelle gleich dem Querschnitt des Kabels selbst aufweist, und
**dass** das erste und zweite Mittel mit Löchern oder Aussparungen für das längliche flexible Element bereitgestellt ist.

2. Ein Verfahren gemäß Anspruch 1, **dadurch gekennzeichnet, dass** das längliche flexible Element derart durch die Löcher oder Aussparungen geführt wird, so dass das flexible Element eine Schleife bildet und dass die Schleife durch einen Sicherungsdraht oder ähnliches geschlossen ist.

3. Ein Verfahren gemäß Anspruch 1 oder 2, **dadurch gekennzeichnet, dass** das längliche flexible Element gespannt ist.

4. Ein Verfahren gemäß Anspruch 1, 2 oder 3, **dadurch gekennzeichnet, dass** das längliche flexible Element in Relation zu den Kabelseelen mittels einem oder mehreren Abstandshaltern angeordnet ist.

5. Eine Vorrichtung
zum Durchführen des Verfahrens gemäß einem der vorherigen Ansprüche beim Verbinden eines Unterseekabels (2, 3), welches zwei oder mehr parallele Kabelseelen (21, 22, 31, 32) umfasst, für den Zweck der Sicherstellung der erforderlichen Zugfestigkeit über die Verbindung (1), wobei das Unterseekabel (2, 3), für den mechanischen Schutz und für die erforderliche Zugfestigkeit, eine Vielzahl von Armierungsdrähten umfasst, welche in der Form spiralförmiger Linien oder ähnlichem im Wesentlichen gleichmäßig um den Umfang des Kabels (2, 3) verteilt sind,
welche Vorrichtung umfasst
ein erstes Mittel (23), welches mit der Armierung des Kabels (2) auf einer ersten Seite der Verbindung (1) oder der Reparaturstelle zusammenwirkt,
ein zweites Mittel (33), welches mit der Armierung des Kabels (3) auf einer zweiten Seite der Verbindung (1) oder der Reparaturstelle zusammenwirkt, und wobei
ein längliches flexibles Element (4), welches mit dem ersten Mittel (23) und dem zweiten Mittel (33) zusammenwirkt,
**dadurch gekennzeichnet, dass**
die ersten und zweiten Mittel (23, 33) komplett oder im Wesentlichen komplett innerhalb eines Raums positioniert sind, der einen radialen Querschnitt an der Verbindung oder der Reparaturstelle (1) gleich dem Querschnitt des Kabels (2, 3) selbst aufweist,
dass das längliche flexible Element (4) komplett oder im Wesentlichen komplett innerhalb eines Raums positioniert ist, der einen radialen Querschnitt an der Verbindung oder der Reparaturstelle (1) gleich dem Querschnitt des Kabels (2, 3) selbst aufweist, und
dass das erste und zweite Mittel (23, 33) mit Löchern oder Aussparungen (4a, 4b) für das längliche flexible Element (4) bereitgestellt sind.

6. Eine Vorrichtung gemäß Anspruch 5, **dadurch gekennzeichnet, dass** das längliche flexible Element (4) aus einem Stahlkabel oder ähnlichem besteht.

7. Eine Vorrichtung gemäß Anspruch 5 oder 6, **dadurch gekennzeichnet, dass** das längliche flexible Element (4) eine geschlossene Schleife bildet.

8. Eine Vorrichtung gemäß Anspruch 5, 6 oder 7, **gekennzeichnet durch** Abstandshalter (11), welche das längliche flexible Element (4) im Verhältnis zu den Seelen (21, 22, 31, 32) des Kabels (2, 3) anordnen.

## Revendications

1. Procédé pour assurer la résistance à la traction requise d'une jonction ou d'une réparation lors de la jonction ou de la réparation d'un câble sous-marin, le câble comprenant
deux âmes de câble parallèles ou plusieurs âmes de câble parallèles, et, pour une protection mécanique et pour la résistance à la traction requise, une pluralité de fils d'armure, disposés sous la forme de lignes hélicoïdales ou analogues, répartis essentiellement uniformément autour de la surface du câble,
dans lequel
on relie un premier moyen à l'armure du câble d'un premier côté de la jonction de la réparation,
on relie un deuxième moyen à l'armure du câble d'un deuxième côté de la jonction de la réparation, et
on relie entre eux le premier et le deuxième moyens par un élément souple oblong,
**caractérisé en ce que**
on place le premier et le deuxième moyens entièrement, ou pour l'essentiel entièrement, dans un espace ayant une section transversale radiale à la jonction ou à la réparation égale à la section transversale radiale du câble soi-même,
on place l'élément souple oblong entièrement, ou pour l'essentiel entièrement, dans un espace ayant une section transversale radiale à la jonction ou à la réparation égale à la section transversale radiale du câble soi-même, et
le premier et le deuxième moyens sont munis de trous ou de cavités pour l'élément souple oblong.

2. Procédé suivant la revendication 1, **caractérisé en ce que** l'on fait passer l'élément souple oblong dans les trous ou les cavités de façon à ce que l'élément souple forme une boucle et de façon à ce que la boucle soit fermée par un verrou de fil ou analogue.

3. Procédé suivant la revendication 1 ou 2, **caractérisé en ce que** l'on met l'élément souple oblong sous tension.

4. Procédé suivant la revendication 1, 2 ou 3, **caractérisé en ce que** l'on met l'élément souple oblong en position par rapport aux âmes du câble au moyen d'un intercalaire ou de plusieurs intercalaires.

5. Dispositif
pour effectuer le procédé suivant l'une quelconque des revendications précédentes lorsque l'on effectue la jonction d'un câble (2, 3) sous-marin comprenant deux âmes (21, 22, 31, 32) de câble parallèles ou plusieurs âmes de câble parallèles, afin d'assurer la résistance à la traction requise de la jonction (1), dans lequel le câble (2, 3) sous-marin comprend, pour une protection mécanique et pour la résistance à la traction requise, une pluralité de fils d'armure, disposés sous la forme de lignes hélicoïdales ou analogues, répartis sensiblement uniformément autour de la circonférence du câble (2, 3) comprenant
un premier moyen (23) coopérant avec l'armure du câble (2) d'un premier côté de la jonction (1) ou de la réparation, un deuxième moyen (33) coopérant avec l'armure du câble (3) d'un deuxième côté de la jonction (1) ou de la réparation, et
un élément (4) souple oblong coopérant avec le premier moyen (23) et avec le deuxième moyen (33),
**caractérisé en ce que**
le premier et le deuxième moyens (23, 33) sont placés entièrement, ou pour l'essentiel entièrement, dans un espace ayant une section transversale radiale à la jonction ou à la réparation égale à la section transversale radiale du câble (2, 3) soi-même,
l'élément (4) souple oblong est placé entièrement, ou pour l'essentiel entièrement, dans un espace ayant une section transversale radiale à la jonction ou à la réparation égale à la section transversale radiale du câble (2, 3) soi-même, et
le premier et le deuxième moyens (23, 33) sont munis de trous ou de cavités (4a, 4b) pour l'élément (4) souple oblong.

6. Dispositif suivant la revendication 5, **caractérisé en ce que** l'élément (4) souple oblong consiste en un câble en acier ou analogue.

7. Dispositif suivant la revendication 5 ou 6, **caractérisé en ce que** l'élément (4) souple oblong forme une boucle fermée.

8. Dispositif suivant la revendication 5, 6 ou 7, **caractérisé par** des intercalaires (11) mettant l'élément (4) souple oblong en position par rapport aux âmes (21, 22, 31, 32) du câble (2, 3).
